# EUROPEAN PATENT APPLICATION

(11) **EP 4 580 139 A1**
(43) Date of publication of application: **02.07.2025**
(21) Application number: 23870250.0
(22) Date of filing: 07.09.2023
(51) Int. Cl.: H04L 27/26

(54) **COMMUNICATION METHOD, APPARATUS, AND SYSTEM**

(30) Priority: 30.09.2022 CN 202211214400
(71) Applicant: Huawei Technologies Co., Ltd., Shenzhen, Guangdong 518129 (CN)
(72) Inventor: DANG, Juntao, Shenzhen, Guangdong 518129 (CN); YI, Xiongshu, Shenzhen, Guangdong 518129 (CN)
(74) Representative: Thun, Clemens
(86) International application number: PCT/CN2023/117529
(87) International publication number: WO 2024/067011

(57) **Abstract**

This application provides a communication method, apparatus, and system, to increase a data transmission rate of a terminal device using a DFT-S-OFDM waveform when a single uplink CC is used in a CA scenario. The communication method, apparatus, and system may be applied to a 5G system, a future communication system such as a 6G system, and other fields. The method includes: sending first indication information to the terminal device when a first condition is satisfied, and receiving data from the terminal device by using the DFT-S-OFDM waveform and a first modulation scheme. The first condition includes: There is one component carrier used by the terminal device to perform uplink data transmission in the carrier aggregation CA scenario. The CA scenario includes that CA is configured for uplink and/or CA is configured for downlink. The first indication information indicates to use the DFT-S-OFDM waveform and the first modulation scheme to perform uplink transmission. The first modulation scheme includes 16 quadrature amplitude modulation QAM or 64 QAM.

## Description

This application claims priority to Chinese Patent Application No. 202211214400.3, filed with the China National Intellectual Property Administration on September 30, 2022 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

A discrete Fourier transform-spread-orthogonal frequency division multiplexing (discrete Fourier transform-spread-orthogonal frequency division multiplexing, DFT-S-OFDM) waveform and a cyclic prefix-orthogonal frequency division multiplexing (cyclic prefix-orthogonal frequency division multiplexing, CP-OFDM) waveform are modulation waveforms that can be used for uplink communication. In comparison with the CP-OFDM waveform, the DFT-S-OFDM waveform achieves better equalization in terms of maximum power reduction (maximum power reduction, MPR) and the like.

It is specified in a protocol that in a carrier aggregation (carrier aggregation, CA) scenario, when a terminal device uses a single uplink component carrier (component carrier, CC) for data transmission, the terminal device may use the DFT-S-OFDM waveform or the CP-OFDM waveform. Although MPR of the DFT-S-OFDM waveform is lower than MPR of the CP-OFDM waveform, and therefore the DFT-S-OFDM waveform is superior in terms of MPR, when the terminal device is located at a mid-near point of a coverage area of a network device and the single uplink CC is used in the CA scenario, a data transmission rate of using the CP-OFDM waveform is higher in comparison with the use of the protocol-specified CP-OFDM waveform for data transmission and the use of the protocol-specified DFT-S-OFDM waveform for data transmission. Therefore, at the mid-near point, the terminal device uses the CP-OFDM waveform for uplink transmission, but cannot take the advantage of the low MPR of the DFT-S-OFDM waveform.

### SUMMARY

Embodiments of this application provide a communication method, apparatus, and system, to increase a data transmission rate.

To achieve the foregoing objective, this application uses the following technical solutions.

According to a first aspect, a communication method is provided. The method includes: sending first indication information to a terminal device when a first condition is satisfied, and receiving data from the terminal device by using a DFT-S-OFDM waveform and a first modulation scheme. The first condition includes: There is one component carrier used by the terminal device to perform uplink data transmission in a carrier aggregation CA scenario. The CA scenario includes that CA is configured for uplink and/or CA is configured for downlink. The first indication information indicates to use the discrete Fourier transform-spread-orthogonal frequency division multiplexing DFT-S-OFDM waveform and the first modulation scheme to perform uplink transmission. The first modulation scheme includes 16 quadrature amplitude modulation (quadrature amplitude modulation, QAM) or 64 QAM.

According to the communication method provided in the first aspect, when there is one component carrier used by the terminal device to perform uplink data transmission in the CA scenario, a network device sends the first indication information to the terminal device, to indicate the terminal device to use the DFT-S-OFDM waveform and the first modulation scheme to perform uplink transmission. The first modulation scheme includes the 16 QAM or the 64 QAM. The 16 QAM and the 64 QAM are compared with Pi/2 binary phase shift keying (binary phase shift keying, BPSK) and quadrature phase shift keying (quadrature phase shift keying, QPSK), and the 16 QAM and the 64 QAM have higher modulation orders, so that a higher data transmission rate can be obtained. In this way, a data transmission rate of the terminal device using the DFT-S-OFDM waveform when a single uplink CC is used in the CA scenario can be increased.

In addition, in comparison with the use of the CP-OFDM waveform, the use of the DFT-S-OFDM waveform makes transmit power reduction less, and achieves larger transmit power after the reduction. Therefore, a larger coverage gain can be obtained, and user experience is better. Therefore, when the terminal device is located at a mid-near point of a coverage area of the network device, and the single uplink CC is used in the CA scenario, the terminal device uses the DFT-S-OFDM waveform and the first modulation scheme to perform uplink transmission, so that an advantage of low MPR of the DFT-S-OFDM waveform can be fully taken, and the data transmission rate can be increased.

In a possible design manner, that there is one component carrier used by the terminal device to perform uplink data transmission may include: The terminal device is configured as a single uplink component carrier, and resource blocks (resource blocks, RBs) for data transmission in the component carrier used by the terminal device to perform uplink data transmission are contiguous. Alternatively, the terminal device is configured as uplink intra-band contiguous CA, only one of a plurality of component carriers in the CA is used by the terminal device to perform uplink data transmission, and RBs for data transmission in the component carrier used by the terminal device to perform uplink data transmission are contiguous.

In other words, that there is one component carrier used by the terminal device to perform uplink data transmission includes: The terminal device is configured as the single uplink component carrier, the single component carrier is used for uplink data transmission, and the RBs in the component carrier used by the terminal device are contiguous. Alternatively, that there is one component carrier used by the terminal device to perform uplink data transmission includes: The terminal device is configured as the uplink CA, the terminal device uses only one component carrier to perform uplink data transmission, and the RBs in the component carrier used by the terminal device are contiguous.

In a possible design manner, the first condition further includes: An uplink channel bandwidth is less than or equal to 400 megahertz.

For example, the first condition may include: The terminal device is configured as the single uplink component carrier in the CA scenario, the RBs for data transmission in the component carrier used by the terminal device to perform uplink data transmission are contiguous, and the uplink channel bandwidth is less than or equal to 400 megahertz.

For another example, the first condition may include: The terminal device is configured as the uplink intra-band contiguous CA in the CA scenario, only one of the plurality of component carriers in the CA is used by the terminal device to perform uplink data transmission, the RBs for data transmission in the component carrier used by the terminal device to perform uplink data transmission are contiguous, and the uplink channel bandwidth is less than or equal to 400 megahertz.

In a possible design manner, a first correspondence exists among the DFT-S-OFDM waveform, the first modulation scheme, and a first power reduction range, and the first power reduction range includes a maximum power reduction value.

In other words, the first correspondence includes correspondences between the DFT-S-OFDM waveform, the first modulation scheme, and the first power reduction range. In this way, after receiving the first indication information, the terminal device may select the first power reduction range (corresponding to the used waveform and the modulation scheme) from the first correspondence to perform power reduction, to ensure that transmit power is in a linear region of a power amplifier, thereby ensuring system performance.

In a possible design manner, the first correspondence includes: When the uplink channel bandwidth is less than or equal to 200 megahertz and a waveform for data transmission is the DFT-S-OFDM waveform, a maximum power reduction value corresponding to the 16 QAM is 3 dB or 3.5 dB, and a maximum power reduction value corresponding to the 64 QAM is 5 dB or 5.5 dB.

In a possible design manner, the first correspondence includes: When the uplink channel bandwidth is equal to 400 megahertz and the waveform for data transmission is the DFT-S-OFDM waveform, the maximum power reduction value corresponding to the 16 QAM is 4.5 dB, and the maximum power reduction value corresponding to the 64 QAM is 6.5 dB.

In a possible design manner, the first indication information is carried in radio resource control (radio resource control, RRC) signaling.

In a possible design manner, the terminal device is a terminal that supports operating at a power class 3 (power class 3, PC3) of a frequency range 2 (frequency range 2, FR2).

According to a second aspect, a communication method is provided. The method is applied to a scenario in which there is one component carrier used by a terminal device to perform uplink data transmission in a carrier aggregation CA scenario, where the CA scenario includes that CA is configured for uplink and/or CA is configured for downlink. The method includes: receiving first indication information from a network device, and sending data to the network device by using a DFT-S-OFDM waveform and a first modulation scheme. The first indication information indicates to use the discrete Fourier transform-spread-orthogonal frequency division multiplexing DFT-S-OFDM waveform and the first modulation scheme to perform uplink transmission. The first modulation scheme includes 16 quadrature amplitude modulation QAM or 64 QAM.

In a possible design manner, that there is one component carrier used by the terminal device to perform uplink data transmission may include: The terminal device is configured as a single uplink component carrier, and RBs for data transmission in the component carrier used by the terminal device to perform uplink data transmission are contiguous. Alternatively, the terminal device is configured as uplink intra-band contiguous CA, only one of a plurality of component carriers in the CA is used by the terminal device to perform uplink data transmission, and RBs for data transmission in the component carrier used by the terminal device to perform uplink data transmission are contiguous.

In a possible design manner, a first condition may further include: An uplink channel bandwidth is less than or equal to 400 megahertz.

In a possible design manner, a first correspondence exists among the DFT-S-OFDM waveform, the first modulation scheme, and a first power reduction range, and the first power reduction range includes a maximum power reduction value.

In a possible design manner, the sending data to the network device by using a DFT-S-OFDM waveform and a first modulation scheme includes: sending the data to the network device by using the DFT-S-OFDM waveform and the first modulation scheme based on first transmit power. The first transmit power is obtained by performing transmit power reduction based on the first correspondence.

In a possible design manner, the first correspondence may include: When the uplink channel bandwidth is less than or equal to 200 megahertz and a waveform for data transmission is the DFT-S-OFDM waveform, a maximum power reduction value corresponding to the 16 QAM is 3 dB or 3.5 dB, and a maximum power reduction value corresponding to the 64 QAM is 5 dB or 5.5 dB.

In a possible design manner, the first correspondence may include: When the uplink channel bandwidth is equal to 400 megahertz and the waveform for data transmission is the DFT-S-OFDM waveform, the maximum power reduction value corresponding to the 16 QAM is 4.5 dB, and the maximum power reduction value corresponding to the 64 QAM is 6.5 dB.

In a possible design manner, the first indication information is carried in radio resource control RRC signaling.

In a possible design manner, the terminal device is a terminal that supports operating at a power class 3 of a frequency range 2 FR2.

For technical effects of the communication method according to the second aspect, refer to the technical effects of the communication method according to any one of the possible implementations of the first aspect. Details are not described herein again.

According to a third aspect, a communication apparatus is provided. The communication apparatus includes a sending module and a receiving module.

The sending module is configured to send first indication information to a terminal device when a first condition is satisfied. The receiving module is configured to receive data from the terminal device by using a DFT-S-OFDM waveform and a first modulation scheme. The first condition includes: There is one component carrier used by the terminal device to perform uplink data transmission in a carrier aggregation CA scenario. The CA scenario includes that CA is configured for uplink and/or CA is configured for downlink. The first indication information indicates to use the discrete Fourier transform-spread-orthogonal frequency division multiplexing DFT-S-OFDM waveform and the first modulation scheme to perform uplink transmission. The first modulation scheme includes 16 quadrature amplitude modulation QAM or 64 QAM.

In a possible design manner, that there is one component carrier used by the terminal device to perform uplink data transmission may include: The terminal device is configured as a single uplink component carrier, and RBs for data transmission in the component carrier used by the terminal device to perform uplink data transmission are contiguous. Alternatively, the terminal device is configured as uplink intra-band contiguous CA, only one of a plurality of component carriers in the CA is used by the terminal device to perform uplink data transmission, and RBs for data transmission in the component carrier used by the terminal device to perform uplink data transmission are contiguous.

In a possible design manner, the first condition further includes: An uplink channel bandwidth is less than or equal to 400 megahertz.

In a possible design manner, a first correspondence exists among the DFT-S-OFDM waveform, the first modulation scheme, and a first power reduction range, and the first power reduction range includes a maximum power reduction value.

In a possible design manner, the first correspondence includes: When the uplink channel bandwidth is less than or equal to 200 megahertz and a waveform for data transmission is the DFT-S-OFDM waveform, a maximum power reduction value corresponding to the 16 QAM is 3 dB or 3.5 dB, and a maximum power reduction value corresponding to the 64 QAM is 5 dB or 5.5 dB.

In a possible design manner, the first correspondence includes: When the uplink channel bandwidth is equal to 400 megahertz and the waveform for data transmission is the DFT-S-OFDM waveform, the maximum power reduction value corresponding to the 16 QAM is 4.5 dB, and the maximum power reduction value corresponding to the 64 QAM is 6.5 dB.

In a possible design manner, the first indication information is carried in radio resource control RRC signaling.

In a possible design manner, the terminal device is a terminal that supports operating at a power class 3 of a frequency range 2 FR2.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the third aspect may further include a processing module and a storage module. The storage module stores a program or instructions. When the processing module executes the program or the instructions, the communication apparatus according to the third aspect may be enabled to perform the method according to the first aspect.

It should be noted that the communication apparatus according to the third aspect may be a network device, or may be a chip (a system) or another part or component that can be disposed in the network device. This is not limited in this application.

For technical effects of the communication apparatus according to the third aspect, refer to the technical effects of the communication method according to any one of the possible implementations of the first aspect. Details are not described herein again.

According to a fourth aspect, a communication apparatus is provided. The communication apparatus is applied to a scenario in which there is one component carrier used by the communication apparatus to perform uplink data transmission in a carrier aggregation CA scenario. The CA scenario includes that CA is configured for uplink and/or CA is configured for downlink. The communication apparatus includes a sending module and a receiving module.

The receiving module is configured to receive first indication information from a network device. The sending module is configured to send data to the network device by using a DFT-S-OFDM waveform and a first modulation scheme. The first indication information indicates to use the discrete Fourier transform-spread-orthogonal frequency division multiplexing DFT-S-OFDM waveform and the first modulation scheme to perform uplink transmission. The first modulation scheme includes 16 quadrature amplitude modulation QAM or 64 QAM.

In a possible design manner, that there is one component carrier used by the communication apparatus to perform uplink data transmission may include: The communication apparatus is configured as a single uplink component carrier; or the communication apparatus is configured as uplink intra-band contiguous CA, and only one of a plurality of component carriers in the CA is used by the communication apparatus to perform uplink data transmission.

In a possible design manner, a first condition may further include: An uplink channel bandwidth is less than or equal to 400 megahertz.

In a possible design manner, a first correspondence exists among the DFT-S-OFDM waveform, the first modulation scheme, and a first power reduction range, and the first power reduction range includes a maximum power reduction value.

In a possible design manner, the sending module is further configured to send the data to the network device by using the DFT-S-OFDM waveform and the first modulation scheme based on first transmit power. The first transmit power is obtained by performing transmit power reduction based on the first correspondence.

In a possible design manner, the first correspondence may include: When the uplink channel bandwidth is less than or equal to 200 megahertz and a waveform for data transmission is the DFT-S-OFDM waveform, a maximum power reduction value corresponding to the 16 QAM is 3 dB or 3.5 dB, and a maximum power reduction value corresponding to the 64 QAM is 5 dB or 5.5 dB.

In a possible design manner, the first correspondence may include: When the uplink channel bandwidth is equal to 400 megahertz and the waveform for data transmission is the DFT-S-OFDM waveform, the maximum power reduction value corresponding to the 16 QAM is 4.5 dB, and the maximum power reduction value corresponding to the 64 QAM is 6.5 dB.

In a possible design manner, the first indication information is carried in radio resource control RRC signaling.

In a possible design manner, the communication apparatus is a terminal that supports operating at a power class 3 of a frequency range 2 FR2.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the fourth aspect may further include a processing module and a storage module. The storage module stores a program or instructions. When the processing module executes the program or the instructions, the communication apparatus according to the fourth aspect may be enabled to perform the method according to the second aspect.

It should be noted that the communication apparatus according to the fourth aspect may be a terminal device, or may be a chip (a system) or another part or component that can be disposed in the terminal device. This is not limited in this application.

For technical effects of the communication apparatus according to the fourth aspect, refer to the technical effects of the communication method according to any one of the possible implementations of the second aspect. Details are not described herein again.

According to a fifth aspect, a communication apparatus is provided. The communication apparatus includes a processor, and the processor is configured to perform the communication method according to any one of the possible implementations of the first aspect and the second aspect.

In addition, for technical effects of the communication apparatus according to the fifth aspect, refer to the technical effects of the communication method according to any one of the implementations of the first aspect and the second aspect. Details are not described herein again.

According to a sixth aspect, a communication apparatus is provided. The communication apparatus includes a processor, the processor is coupled to a memory, and the memory is configured to store a computer program.

The processor is configured to execute the computer program stored in the memory, so that the communication method according to any one of the possible implementations of the first aspect and the second aspect is performed.

In a possible design, the communication apparatus according to the sixth aspect may further include a transceiver. The transceiver may be a transceiver circuit or an input/output port. The transceiver may be used by the communication apparatus to communicate with another device.

It should be noted that the input port may be configured to implement the receiving functions in the first aspect and the second aspect, and the output port may be configured to implement the sending functions in the first aspect and the second aspect.

In this application, the communication apparatus according to the sixth aspect may be a network device or a terminal device, or a chip or a chip system disposed inside the network device or the terminal device.

In addition, for technical effects of the communication apparatus according to the sixth aspect, refer to the technical effects of the communication method according to any one of implementations of the first aspect and the second aspect. Details are not described herein again.

According to a seventh aspect, a communication system is provided. The communication system includes the communication apparatus according to the third aspect and the communication apparatus according to the fourth aspect. Alternatively, the communication system includes the communication apparatus according to the third aspect for implementing the method according to the first aspect and the communication apparatus according to the fourth aspect for implementing the method according to the second aspect.

According to an eighth aspect, a chip system is provided. The chip system includes a logic circuit and an input/output port. The logic circuit is configured to implement the processing functions in the first aspect and the second aspect, and the input/output port is configured to implement the transceiver functions in the first aspect and the second aspect. Specifically, the input port may be configured to implement the receiving functions in the first aspect and the second aspect, and the output port may be configured to implement the sending functions in the first aspect and the second aspect.

In a possible design, the chip system further includes a memory, and the memory is configured to store program instructions and data for implementing the functions in the first aspect and the second aspect.

The chip system may include a chip, or may include a chip and another discrete component.

According to a ninth aspect, a computer-readable storage medium is provided. The computer-readable storage medium stores a computer program or instructions. When the computer program or the instructions are run on a computer, the communication method according to any one of the possible implementations of the first aspect and the second aspect is performed.

According to a tenth aspect, a computer program product is provided, and includes a computer program or instructions. When the computer program or the instructions are run on a computer, the communication method according to any one of the possible implementations of the first aspect and the second aspect is performed.

### BRIEF DESCRIPTION OF DRAWINGS

FIG. 1 is a diagram of an architecture of a communication system according to an embodiment of this application;
FIG. 2 is a diagram of an application scenario according to an embodiment of this application;
FIG. 3 is a schematic flowchart of a communication method according to an embodiment of this application;
FIG. 4 is a diagram of a structure of a communication apparatus according to an embodiment of this application; and
FIG. 5 is a diagram of a structure of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a 5th generation (5th generation, 5G) mobile communication system, such as a new radio (new radio, NR) system, and a future communication system, such as a 6th generation (6th generation, 6G) mobile communication system.

All aspects, embodiments, or features are presented in this application by describing a system that may include a plurality of devices, components, modules, and the like. It should be appreciated and understood that, each system may include another device, components, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is for presenting a concept in a specific manner.

In embodiments of this application, sometimes "of (of)", "corresponding (corresponding, relevant)", and "corresponding (corresponding)" may be mixed. It should be noted that when differences are not emphasized, the meaning to be expressed is the same.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of new service scenarios, the technical solutions provided in embodiments of this application are also applicable to similar technical problems.

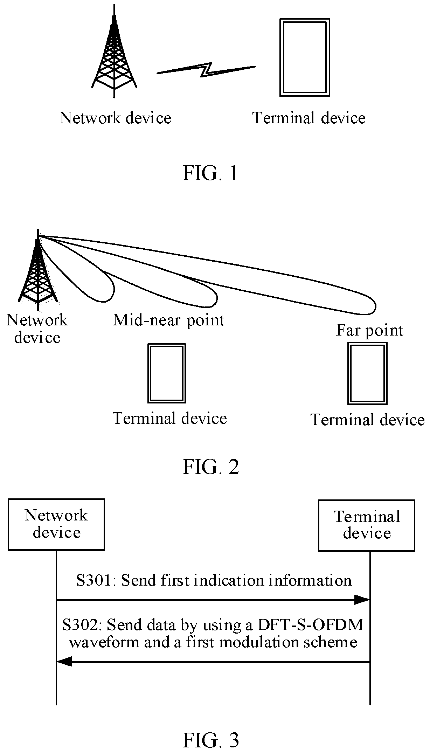

For ease of understanding embodiments of this application, a communication system shown in FIG. 1 is first used as an example to describe in detail a communication system applicable to embodiments of this application. For example, FIG. 1 is a diagram of an architecture of a communication system to which a communication method according to an embodiment of this application is applicable.

As shown in FIG. 1, the communication system includes a network device and a terminal device. Optionally, there may be one or more network devices.

The network device may also be referred to as an access device, an access network device, or a radio access network device. The network device can manage a radio resource, provide an access service for the terminal device, and complete data forwarding between the terminal device and a core network. The network device may also be understood as a base station in a network.

For example, the network device in embodiments of this application may be any communication device that has a wireless transceiver function and that is configured to communicate with the terminal device. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, HeNB, or home NodeB, HNB), a baseband unit (baseband unit, BBU), an access point (access point, AP) in a wireless fidelity (wireless fidelity, Wi-Fi) system, a radio relay node, a radio backhaul node, a transmission point (transmission point, TP), or a TRP, or the like, and may be a gNB, or a transmission point (TRP or TP) in a 5G system, for example, an NR system, or one or a group of (including a plurality of antenna panels) antenna panels of a base station in a 5G system, may be a network node that forms a gNB or a transmission point, for example, a baseband unit (BBU) or a distributed unit (distributed unit, DU), may be a satellite, an uncrewed aerial vehicle, or the like, or may be a next-generation base station in a 6G mobile communication system, an access network device or a module of an access network device in an open access network ORAN (open RAN, ORAN) system, a base station in a future mobile communication system, an access node in a Wi-Fi system, or the like.

In some deployments, the gNB may be a module or unit that can implement some functions of a base station. The gNB may be a central unit (centralized unit, CU), a DU, a CU-control plane (control plane, CP), a CU-user plane (user plane, UP), a radio unit (radio unit, RU), or the like. The gNB may further include an active antenna unit (active antenna unit, AAU). The CU implements some functions of the gNB, and the DU implements some functions of the gNB. For example, the CU is responsible for processing a non-real-time protocol and a service, and implementing functions of an RRC and a packet data convergence protocol (packet data convergence protocol, PDCP) layer. The DU is responsible for processing a physical layer protocol and a real-time service, and performing functions of a radio link control (radio link control, RLC) layer, a MAC layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher-layer signaling, for example, RRC layer signaling, may also be considered to be sent by the DU, or sent by the DU and the AAU. It may be understood that the network device may be a device including one or more of a CU node, a DU node, and an AAU node. In addition, the CU may be divided into a network device in an access network (radio access network, RAN), or the CU may be divided into a network device in a core network (core network, CN). This is not limited in this application. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU.

The network device may include a CU and a DU. This design may be referred to as CU and DU separation. A plurality of DUs may be controlled by one CU in a centralized manner. For example, an interface between the CU and the DU is referred to as an F1 interface. A control plane interface may be F1-C, and a user plane interface may be F1-U. A specific name of each interface is not limited in this application. The CU and the DU may be divided based on protocol layers of a wireless network. For example, functions of a PDCP layer and protocol layers (such as an RRC layer and an SDAP layer) above the PDCP layer are set on the CU, and functions of protocol layers (such as an RLC layer, a MAC layer, and a PHY layer) below the PDCP layer are set on the DU. For another example, functions of protocol layers above a PDCP layer are set on the CU, and functions of the PDCP layer and protocol layers below the PDCP layer are set on the DU. This is not limited.

The division into processing functions of the CU and the DU based on protocol layers is merely an example, and the processing functions of the CU and the DU may alternatively be divided in another division manner. For example, the CU or the DU may be divided to have functions of more protocol layers. For another example, the CU or the DU is further divided to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, division of functions of the CU or the DU may be performed based on service types or other system requirements, for example, based on a latency. Functions whose processing time needs to satisfy a latency requirement are set on the DU, and functions whose processing time does not need to satisfy the latency requirement are set on the CU.

Optionally, the CU may have one or more functions of a core network.

Optionally, a radio unit (radio unit, RU) of the DU may be disposed remotely. The RU has a radio frequency function. For example, the DU and the RU may be divided at the PHY layer. For example, the DU may implement higher-layer functions of the PHY layer, and the RU may implement lower-layer functions of the PHY layer. When sending is performed, functions of the PHY layer may include at least one of the following: cyclic redundancy check (cyclic redundancy check, CRC) bit addition, channel coding, rate matching, scrambling, modulation, layer mapping, precoding, resource mapping, physical antenna mapping, or a radio frequency sending function. When receiving is performed, functions of the PHY layer may include at least one of the following: CRC check, channel decoding, rate de-matching, descrambling, demodulation, layer demapping, channel detection, resource demapping, physical antenna demapping, or a radio frequency receiving function. The higher-layer functions of the PHY layer may include some functions of the PHY layer. For example, the some functions are closer to the MAC layer. The lower-layer functions of the PHY layer may include some other functions of the PHY layer. For example, the some other functions are closer to the radio frequency function. For example, the higher-layer functions of the PHY layer may include CRC bit addition, channel coding, rate matching, scrambling, modulation, and layer mapping, and the lower-layer functions of the PHY layer may include precoding, resource mapping, physical antenna mapping, and the radio frequency sending function. Alternatively, the higher-layer functions of the PHY layer may include CRC bit addition, channel coding, rate matching, scrambling, modulation, layer mapping, and precoding, and the lower-layer functions of the PHY layer may include resource mapping, physical antenna mapping, and the radio frequency sending function. For example, the higher-layer functions of the PHY layer may include CRC check, channel decoding, rate de-matching, decoding, demodulation, and layer demapping, and the lower-layer functions of the PHY layer may include channel detection, resource demapping, physical antenna demapping, and the radio frequency receiving function. Alternatively, the higher-layer functions of the PHY layer may include CRC check, channel decoding, rate de-matching, decoding, demodulation, layer demapping, and channel detection, and the lower-layer functions of the PHY layer may include resource demapping, physical antenna demapping, and the radio frequency receiving function.

Optionally, the functions of the CU may be further divided, and a control plane and a user plane are split and implemented by different entities. Split entities are respectively a control plane CU entity (namely, a CU-CP entity) and a user plane CU entity (namely, a CU-UP entity). The CU-CP entity and the CU-UP entity may be separately connected to the DU. In this application, an entity may be understood as a module or a unit, and an existence form of the entity may be a hardware structure, a software module, or a combination of the hardware structure and the software module. This is not limited.

Optionally, any one of the DU, the CU, the CU-CP, the CU-UP, and the RU may be a software module, a hardware structure, or a combination of the software module and the hardware structure. This is not limited. Different entities may have a same existence form or may have different existence forms. For example, the CU, the CU-CP, the CU-UP, and the DU are software modules, and the RU is a hardware structure. For brevity of description, all possible combination forms are not enumerated herein. The modules and methods performed by the modules also fall within the protection scope of this application. For example, when the method in this application is performed by the network device, the method may specifically be performed by at least one of the CU, the CU-CP, the CU-UP, the DU, or the RU. For example, the method may specifically be performed by the CU.

The terminal device is a terminal that accesses the communication system and has a wireless transceiver function, or a chip or a chip system that may be disposed in the terminal. In this application, the terminal device may also be referred to as a terminal, user equipment (user equipment, UE), an access terminal, a subscriber unit, a subscriber station, a mobile station, a remote station, a remote terminal, a mobile device, a user terminal, a wireless communication device, a user agent, or a user apparatus. In embodiments of this application, the terminal may be a mobile phone (mobile phone), a tablet computer (pad), an uncrewed aerial vehicle, a computer with a wireless transceiver function, customer premise equipment (customer premise equipment, CPE), a virtual reality (virtual reality, VR) terminal, an augmented reality (augmented reality, AR) terminal, an Internet of Things terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, another processing device, vehicle-mounted device, or wearable device connected to a wireless modem, a terminal in a 5G network, a terminal in a future evolved network, or the like.

For another example, in embodiments of this application, the terminal device may be an express delivery terminal (for example, a device that can monitor a position of a cargo vehicle, or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, in this application, the terminal device may be an in-vehicle module, an in-vehicle assembly, an in-vehicle part, an in-vehicle chip, or an in-vehicle unit that is built in a vehicle as one or more parts or units. The vehicle may implement the method provided in this application by using the in-vehicle module, the in-vehicle assembly, the in-vehicle part, the in-vehicle chip, or the in-vehicle unit that is built in the vehicle.

The network device and/or the terminal device may be fixed, or may be movable. The network device and/or the terminal device may be deployed on land, including an indoor or outdoor device, or a handheld or vehicle-mounted device; may be deployed on water; or may be deployed on an airplane, a balloon, and an artificial satellite in the air. Application scenarios of the network device and the terminal device are not limited in the present disclosure. The network device and the terminal device may be deployed in a same scenario or different scenarios. For example, the network device and the terminal device are both deployed on the land. Alternatively, the network device is deployed on the land, and the terminal device is deployed on the water. Examples are not enumerated.

Optionally, the communication system shown in FIG. 1 is applicable to a communication network in question, is applicable to another future network, or the like. This is not specifically limited in embodiments of this application.

It should be noted that the communication method provided in embodiments of this application is applicable to any two nodes shown in FIG. 1. For specific implementation, refer to the following method embodiments. Details are not described herein.

It should be noted that, in embodiments of this application, the solutions may be alternatively applicable to another communication system, and a corresponding name may alternatively be replaced with a name of a corresponding function in the another communication system.

It should be understood that FIG. 1 is merely a simplified diagram used as an example for ease of understanding. The communication system may further include another network device and/or another terminal device that are/is not drawn in FIG. 1.

To make embodiments of this application clearer, the following uniformly describes some content and concepts related to embodiments of this application.

### 1. Sending/Receiving

In this application, sending information (for example, first indication information) to the terminal device may be understood as that the information is destined for the terminal device. For example, that a module A sends information to the terminal includes: The module A sends the information to the terminal through an air interface. Optionally, the module A may perform a baseband and/or intermediate radio frequency operation on the information; or the module A delivers the information to a module B, and the module B sends the information to the terminal. When sending the information to the terminal, the module B may transparently transmit the information; segment the information and then send the information; or multiplex the information and other information and then send multiplexed information. Optionally, the module B may perform a baseband and/or intermediate radio frequency operation on the information and then send the information; and so on. Optionally, the module B may encapsulate the information in a data packet. Optionally, the module B may further add a packet header, a padding bit, and/or the like to the data packet.

In this application, receiving information from the terminal device may be understood as that the information originates from the terminal device. For example, that the module A receives information from the terminal device includes: The module A receives the information from the terminal through an air interface. Optionally, the module A may perform a baseband and/or intermediate radio frequency operation on the information; or the module B receives the information from the terminal through the air interface, and delivers the information to the module A. That the module B delivers the information to the module A includes: The module B transparently delivers the received information to the module A; combines a plurality of received segments into the information and then delivers the information to the module A; or extracts the information from multiplexed information and then delivers the information to the module A. Optionally, the module B may perform a baseband and/or intermediate radio frequency operation on the received information and then send the information; and so on. Optionally, the information received by the module B is encapsulated in a data packet. Optionally, the data packet includes a packet header, a padding bit, and/or the like.

The module B may be one module, or may be a plurality of modules coupled in sequence. This is not limited. For example, the module A is a DU module, and the module B is an RU module. For another example, the module A is a CU-CP module, and the module B is a DU module and an RU module.

### 2. Modulation waveform

The modulation waveform includes a DFT-S-OFDM waveform and a CP-OFDM waveform. Uplink communication supports the DFT-S-OFDM waveform and the CP-OFDM waveform.

Detailed descriptions of the CP-OFDM waveform and the DFT-S-OFDM waveform are shown in Table 1.

Table 1 shows modulation schemes, RB resource allocation, peak-to-average power ratios (peak-to-average power ratios, PAPRs), and MPR values respectively supported by the modulation waveforms: the CP-OFDM waveform and the DFT-S-OFDM waveform.

As shown in Table 1, the modulation scheme supported by the CP-OFDM waveform includes QPSK, 16 QAM, 64 QAM, and higher-order QAM. The modulation scheme supported by the DFT-S-OFDM waveform includes Pi/2 BPSK, QPSK, 16 QAM, 64 QAM, and higher-order QAM. The Pi/2 BPSK and the QPSK are low-order modulation schemes, and a data transmission rate is low. The 16 QAM and the 64 QAM are high-order modulation schemes, and a data transmission rate is high.

**Table 1**

| Modulation waveform | Modulation scheme | Quantity of codewords | Quantity of layers | RB resource allocation | PAPR | Maximum power reduction (MPR) value |
|---|---|---|---|---|---|---|
| CP-OFDM | QPSK, 16 QAM, 64 QAM, and higher-order QAM | 1 | 1 to 4 | Contiguous or non-contiguous | High | High |
| DFT-S-OFDM | Pi/2 BPSK, QPSK, 16 QAM, 64 QAM, and higher-order QAM | 1 | 1 and 2 | Contiguous | Low | Low |

The quantity of codewords supported by the CP-OFDM waveform is 1, and the quantity of codewords supported by the DFT-S-OFDM waveform is 1.

The quantity of layers supported by the CP-OFDM waveform ranges from 1 to 4, and the quantity of layers supported by the DFT-S-OFDM waveform ranges from 1 to 2.

The CP-OFDM waveform may support single-stream transmission or multi-stream transmission. The DFT-S-OFDM waveform may support single-stream transmission or multi-stream transmission. The single-stream transmission means that only one data stream can be sent at a time. The multi-stream transmission means that a plurality of data streams can be simultaneously sent, so that a system capacity can be increased. For example, the multi-stream transmission may be implemented in a spatial multiplexing manner.

The RB resource allocation supported by the CP-OFDM waveform may be contiguous or non-contiguous. The RB resource allocation supported by the DFT-S-OFDM waveform is contiguous. For example, in a component carrier for data transmission based on the CP-OFDM waveform, RBs for data transmission are contiguous, or may be non-contiguous. In a component carrier for data transmission based on the DFT-S-OFDM waveform, RBs for data transmission are contiguous.

The PAPR of the CP-OFDM waveform is higher than the PAPR of the DFT-S-OFDM waveform. A high PAPR causes non-linear distortion of a signal and degradation of system performance.

MPR of the CP-OFDM waveform is generally higher than MPR of the DFT-S-OFDM waveform. A power reduction value is related to an uplink modulation waveform, a terminal type, a modulation scheme, and the like. For details, refer to the following corresponding descriptions in "3. Power reduction".

A larger uplink transmit power indicates better uplink coverage and user experience. When transmit power before power reduction is the same, lower MPR indicates larger transmit power after the power reduction, and better uplink coverage and user experience. In this way, in comparison with the use of a waveform with higher MPR, the use of a waveform with lower MPR can obtain a larger coverage gain and better user experience.

### 3. Power reduction

There is fluctuation in radio signals during communication between the terminal device and the network device. When the radio signal passes through a power amplifier (power amplifier, PA) of the terminal device, if transmit power of the radio signal is in a non-linear region, the signal is distorted due to a non-linear feature of the power amplifier. Therefore, power reduction needs to be performed on the transmit power of the radio signal, to ensure that the transmit power of the radio signal is in a linear region.

A maximum power reduction MPR value is related to an uplink modulation waveform, a terminal type, a modulation scheme, and the like.

With reference to Table 2 to Table 6, the following describes a power reduction range of a terminal device at a power class 3 of a frequency range 2 (referred to as an FR2 PC3 terminal device for short). The terminal at the power class 3 of the frequency range 2 is also referred to as a terminal device at PC3 in a millimeter wave (millimeter wave) band.

**Table 2**

| Modulation waveform | Modulation scheme | Maximum power reduction value MPR_{WT} (unit: dB) (Uplink or downlink channel bandwidth BW_{channel} ≤ 200 MHz) | |
|---|---|---|---|
| | | Inner RB allocations (inner RB allocations) | Edge RB allocations (edge RB allocations) |
| DFT-S-OFDM | Pi/2 BPSK | 0.0 | ≤ 2.0 |
| | QPSK | 0.0 | ≤ 2.0 |
| | 16 QAM | ≤ 3.0 | ≤ 3.5 |
| | 64 QAM | ≤ 5.0 | ≤ 5.5 |
| CP-OFDM | QPSK | ≤ 3.5 | ≤ 4.0 |
| | 16 QAM | ≤ 5.0 | ≤ 5.0 |
| | 64 QAM | ≤ 7.5 | ≤ 7.5 |

**Table 3**

| Modulation waveform | Modulation scheme | Maximum power reduction value MPR_{WT} (unit: dB) (Uplink or downlink channel bandwidth BW_{channel} = 400 MHz) | |
|---|---|---|---|
| | | Inner RB allocations (inner RB allocations) | Edge RB allocations (edge RB allocations) |
| DFT-S-OFDM | Pi/2 BPSK | 0.0 | ≤ 3.0 |
| | QPSK | 0.0 | ≤ 3.0 |
| | 16 QAM | ≤ 4.5 | ≤ 4.5 |
| | 64 QAM | ≤ 6.5 | ≤ 6.5 |
| CP-OFDM | QPSK | ≤ 5.0 | ≤ 5.0 |
| | 16 QAM | ≤ 6.5 | ≤ 6.5 |
| | 64 QAM | ≤ 9.0 | ≤ 9.0 |

(1) In a condition that the terminal device is configured as a single component carrier, and uplink or downlink channel bandwidths are consistent (where the condition is also referred to as a non-CA scenario or a single CC scenario), the power reduction range of the terminal device whose terminal type is FR2 PC3 is shown in Table 2 and Table 3. When the uplink or downlink channel bandwidth BW_{channel} ≤ 200 megahertz (MHz), the maximum power reduction value MPR_{WT} is shown in Table 2. When the uplink or downlink channel bandwidth BW_{channel} = 400 MHz, the maximum power reduction value MPR_{WT} is shown in Table 3.

Inner RB allocations (inner RB allocations) mean that resources allocated to the terminal device are RBs inside (or close to a middle position of) a channel bandwidth. An example in which the channel bandwidth is 200 MHz is used. The inner RB may be an RB in a middle position (100 MHz) of 200 MHz.

Edge RB allocations (edge RB allocations) mean that resources allocated to the terminal device are RBs at an edge (or close to a middle position) of a channel bandwidth. An example in which the channel bandwidth is 200 MHz is used. The edge RB may be an RB in an edge position (199 MHz) of 200 MHz.

With reference to Table 2 and Table 3, it can be learned that the maximum power reduction value of the terminal device varies in different conditions.

With reference to Table 2, the allocated inner RBs are used as an example. The maximum power reduction value MPR_{WT} corresponding to the QPSK modulation scheme of the DFT-S-OFDM waveform = 0 dB. The maximum power reduction value MPR_{WT} corresponding to the QPSK modulation scheme of the CP-OFDM waveform = 3.5 dB. For other details, refer to Table 2. It can be learned that, in a same modulation scheme, the maximum power reduction value of the DFT-S-OFDM waveform is less than the maximum power reduction value of the CP-OFDM waveform.

In this way, in the condition that the terminal device is configured as the single component carrier and the uplink or downlink channel bandwidths are consistent, the use of a waveform with higher MPR can obtain a larger coverage and better user experience than the use of a waveform with lower MPR.

(2) In a CA scenario, there are the following special conditions: The terminal device is configured as a single uplink CC, RBs for data transmission in a component carrier used by the terminal device to perform uplink data transmission are contiguous, and an uplink channel bandwidth of the terminal device is less than or equal to 400 megahertz. Alternatively, the terminal device is configured as uplink intra-band contiguous CA, only one of a plurality of component carriers in the CA is used by the terminal device to perform uplink data transmission, RBs for data transmission in the component carrier used by the terminal device to perform uplink data transmission are contiguous, and an uplink channel bandwidth of the terminal device is less than or equal to 400 megahertz. If the terminal device (the terminal device whose terminal type is FR2 PC3) uses the DFT-S-OFDM waveform, power reduction may be performed based on the Pi/2 BPSK or QPSK modulation scheme shown in Table 2 and Table 3. Details are specifically shown in Table 4 and Table 5.

**Table 4**

| Modulation waveform | Modulation scheme | Maximum power reduction value MPR_{WT} (unit: dB) (Uplink or downlink channel bandwidth BW_{channel} ≤ 200 MHz) | |
|---|---|---|---|
| | | Inner RB allocations (inner RB allocations) | Edge RB allocations (edge RB allocations) |
| DFT-S-OFDM | Pi/2 BPSK | 0.0 | ≤ 2.0 |
| | QPSK | 0.0 | ≤ 2.0 |

**Table 5**

| Modulation waveform | Modulation scheme | Maximum power reduction value MPR_{WT} (unit: dB) (Uplink or downlink channel bandwidth BW_{channel} = 400 MHz) | |
|---|---|---|---|
| | | Inner RB allocations (inner RB allocations) | Edge RB allocations (edge RB allocations) |
| DFT-S-OFDM | Pi/2 BPSK | 0.0 | ≤ 3.0 |
| | QPSK | 0.0 | ≤ 3.0 |

In the CA scenario, if the terminal device (the terminal device whose terminal type is FR2 PC3) uses the CP-OFDM waveform (regardless of whether the foregoing special condition is satisfied), power reduction is performed based on the following Table 6. In a condition other than the foregoing special condition (a condition that the terminal device is configured as uplink intra-band contiguous CA, and the terminal device uses at least two of a plurality of CCs in the CA to perform uplink data transmission (where no limitation is imposed on downlink)), if the terminal device (the terminal device whose terminal type is FR2 PC3) uses the DFT-S-OFDM waveform, power reduction is performed based on the following Table 6.

Table 6 shows maximum power reduction values respectively corresponding to cases in which the uplink channel bandwidth is less than or equal to 400 MHz, the uplink channel bandwidth is greater than 400 MHz and less than 800 MHz, the uplink channel bandwidth is greater than or equal to 800 MHz and is less than or equal to 1400 MHz, and the uplink channel bandwidth is greater than 1400 MHz and less than or equal to (≤) 2400 MHz.

For example, the terminal device configured as the CA supports simultaneous data sending and/or receiving on the plurality of CCs. Therefore, a throughput rate and a transmission rate are high. For example, the CA terminal device may simultaneously perform data transmission on four CCs.

The plurality of CCs in the CA may include a primary component carrier (primary component carrier, PCC) and a secondary component carrier (secondary component carrier, SCC). The PCC is a component carrier accessed by the terminal device when the terminal device establishes an initial connection, and the SCC is a component carrier that provides an additional frequency band resource.

In this application, the CA scenario means that CA is configured for uplink and/or CA is configured for downlink. In other words, the CA scenario is a scenario in which CA is configured for at least one of the uplink and the downlink.

In this application, the single CC scenario is a scenario in which a single CC is configured for both the uplink and the downlink.

**Table 6**

| Modulation waveform | Modulation scheme | Maximum power reduction value MPR_{WT} (unit: dB) | | | |
|---|---|---|---|---|---|
| | | ≤ 400 MHz | > 400 MHz and < 800 MHz | ≥ 800 MHz and ≤ 1400 MHz | > 1400 MHz and ≤ 2400 MHz |
| DFT-S-OFDM | Pi/2 BPSK | ≤ 5.0¹ | ≤ 7.7¹ | ≤ 8.2 | ≤ 8.7 |
| | QPSK | ≤ 5.0¹ | ≤ 7.7¹ | ≤ 8.2 | ≤ 9.7 |
| | 16 QAM | ≤ 6.5 | ≤ 8.7 | ≤ 9.3 | ≤ 9.7 |
| | 64 QAM | ≤ 9.0 | ≤ 10.7 | ≤ 11.2 | ≤ 11.7 |
| CP-OFDM | QPSK | ≤ 5.0 | ≤ 7.5 | ≤ 8.0 | ≤ 9.7 |
| | 16 QAM | ≤ 6.5 | ≤ 8.7 | ≤ 9.2 | ≤ 9.7 |
| | 64 QAM | ≤ 9.0 | ≤ 10.7 | ≤ 11.2 | ≤ 11.7 |

In some embodiments, the terminal device may use different rules to perform power reduction in different positions of the coverage area of the network device.

FIG. 2 is a diagram of an application scenario according to an embodiment of this application.

With reference to FIG. 2, when a terminal device is located at a far point of a coverage area of a network device, coverage and a channel condition are poor, and the coverage and the channel condition at the far point generally support only two low-order modulation schemes: a single component carrier, and Pi/2 BPSK and QPSK. 16 QAM and 64 QAM are high-order modulation schemes, and a large amount of data is obtained after modulation. When the coverage and the channel condition are poor, a data transmission failure may be caused by using the 16 QAM and the 64 QAM. In this way, when the terminal device is located at the far point of the coverage area of the network device (when both uplink and downlink support only the single component carrier (in a single CC scenario)), the terminal device performs power reduction according to rules shown in the foregoing Table 2 and Table 3.

Because a DFT-S-OFDM waveform is better than a CP-OFDM waveform in terms of a PAPR, MPR, and the like, to obtain better system performance and a higher transmission rate, when the terminal device is located at the far point of the coverage area of the network device, the terminal device generally uses the DFT-S-OFDM waveform to perform data transmission. With reference to Table 4 and Table 5, in comparison, a transmit power reduction value with the use of the DFT-S-OFDM waveform can be 2 dB to 5 dB less than that with the use of the CP-OFDM waveform, and therefore, the use of the DFT-S-OFDM waveform can obtain a larger coverage gain and better user experience.

With reference to FIG. 2, when the terminal device is located at a mid-near point of the coverage area of the network device, coverage and a channel condition are good, and the coverage and the channel condition at the mid-near point may support data transmission of a single CC or a plurality of CCs, and modulation schemes of the Pi/2 BPSK,, the QPSK, the 16 QAM, the 64 QAM, and higher-order QAM.

In this way, in a CA scenario, if the terminal device uses at least two of a plurality of CCs in CA to perform uplink data transmission, the terminal device may perform power reduction according to the rule shown in Table 6. A data transmission rate is high. In comparison with the use of the CP-OFDM waveform and the use of the DFT-S-OFDM waveform, power reduction is the same, and there is no power reduction gain.

In the CA scenario, if the terminal device uses a single CC to perform uplink data transmission and uses the DFT-S-OFDM waveform, the terminal device performs power reduction according to rules shown in Table 4 and Table 5. If the terminal device uses a single CC to perform uplink data transmission and uses the CP-OFDM waveform, the terminal device performs power reduction according to the rule shown in Table 6. Because the coverage and the channel condition at the mid-near point are good, at the mid-near point, the terminal device generally uses the CP-OFDM waveform and the 16-QAM or 64-QAM modulation scheme to perform uplink data transmission (perform power reduction based on Table 6), and the data transmission rate is high. However, a maximum power reduction value of the CP-OFDM waveform is high (which is higher than the maximum power reduction value of the DFT-S-OFDM waveform shown in Table 4 and Table 5), and an advantage of a low maximum power reduction value of the DFT-S-OFDM waveform cannot be taken due to the use of the CP-OFDM waveform.

Therefore, to use the DFT-S-OFDM waveform and fully take the advantage of the low maximum power reduction value of the DFT-S-OFDM waveform, a transmission rate needs to be ensured, and a data transmission rate of the terminal device using the DFT-S-OFDM waveform when a single uplink CC is used in the CA scenario needs to be increased.

This application provides a communication method, to extend a modulation scheme that can be used and that corresponds to a DFT-S-OFDM waveform when the single uplink CC is used in a CA scenario, so that 16 QAM, 64 QAM, or higher-order QAM can be used when the single uplink CC is used in the CA scenario. The 16 QAM, the 64 QAM, and the higher-order QAM are high-order modulation schemes. In comparison with the use of a Pi/2 BPSK or QPSK modulation scheme, the use of the 16-QAM, 64-QAM, or higher-order-QAM modulation scheme has a larger quantity of bits of modulated information, so that a data transmission rate can be increased.

Based on the network architecture and the application scenario, the following describes, in detail with reference to FIG. 3, the communication method provided in embodiments of this application. Actions, terms, and the like in embodiments of this application may be mutually referenced. This is not limited. In embodiments of this application, an object name, a parameter name, or the like is merely an example. During specific implementation, other names may be used. This is not limited.

For example, FIG. 3 is a schematic flowchart of a communication method according to an embodiment of this application.

As shown in FIG. 3, the communication method includes the following steps.

S301: A network device sends first indication information to a terminal device when a first condition is satisfied. Correspondingly, the terminal device receives the first indication information from the network device.

For example, the terminal device is a terminal that supports operating at a power class 3 of a frequency range 2.

For example, the first condition includes: There is one component carrier used by the terminal device to perform uplink data transmission in a CA scenario.

For example, the CA scenario may include that CA is configured for uplink and/or CA is configured for downlink. For details, refer to corresponding descriptions in the foregoing Table 6.

For example, the network device determines, by using information configured by the network device, whether the first condition is satisfied. For example, the network device determines an uplink component carrier/a downlink component carrier configured by the network device for the terminal device. If the network device configures uplink CA and/or downlink CA for the terminal device, the network device determines that the CA scenario is satisfied, and further determines whether only one component carrier is scheduled for the terminal device to perform uplink data transmission. If only one component carrier is scheduled for the terminal device to perform uplink data transmission, it is determined that the first condition is satisfied; otherwise, it is determined that the first condition is not satisfied.

In some embodiments, that there is one component carrier used by the terminal device to perform uplink data transmission may include: The terminal device is configured as a single uplink component carrier, and RBs for data transmission in the component carrier used by the terminal device to perform uplink data transmission are contiguous. In other words, the terminal device is configured as the single uplink component carrier, the single component carrier is used to perform uplink data transmission, and the RBs in the component carrier used by the terminal device are contiguous.

Alternatively, in some other embodiments, that there is one component carrier used by the terminal device to perform uplink data transmission may include: The terminal device is configured as uplink intra-band contiguous CA, only one of a plurality of component carriers in the CA is used by the terminal device to perform uplink data transmission, and RBs for data transmission in the component carrier used by the terminal device to perform uplink data transmission are contiguous. In other words, the terminal device is configured as the uplink CA, the terminal device uses only one component carrier to perform uplink data transmission, and the RBs in the component carrier used by the terminal device are contiguous.

For example, the network device determines an uplink component carrier/a downlink component carrier configured by the network device for the terminal device. If the network device configures uplink CA and/or downlink CA for the terminal device, the network device determines that the CA scenario is satisfied, and further determines whether to configure the single uplink component carrier or the uplink intra-band contiguous CA for the terminal device. If the single uplink component carrier is configured for the terminal device, it is further determined whether the RBs for data transmission in the component carrier configured for the terminal device to perform uplink data transmission are contiguous. If the RBs for data transmission in the component carrier configured for the terminal device to perform uplink data transmission are contiguous, it is determined that the first condition is satisfied; otherwise, it is determined that the first condition is not satisfied. If the uplink intra-band contiguous CA is configured for the terminal device, it is further determined whether only one of the plurality of component carriers in the CA is scheduled for the terminal device to perform uplink data transmission, and whether the RBs for data transmission in the component carrier configured for the terminal device to perform uplink data transmission are contiguous. If the RBs for data transmission in the component carrier configured for the terminal device to perform uplink data transmission are contiguous, it is determined that the first condition is satisfied; otherwise, it is determined that the first condition is not satisfied.

Optionally, the first condition may further include: An uplink channel bandwidth is less than or equal to 400 megahertz.

For example, the network device may further determine whether an uplink channel bandwidth configured by the network device for the terminal device is less than or equal to 400 megahertz. If the uplink channel bandwidth configured by the network device for the terminal device is less than or equal to 400 megahertz, it is determined that the first condition is satisfied; otherwise, it is determined that the first condition is not satisfied.

For example, the first condition may include: The terminal device is configured as the single uplink component carrier in the CA scenario, the RBs for data transmission in the component carrier used by the terminal device to perform uplink data transmission are contiguous, and the uplink channel bandwidth is less than or equal to 400 megahertz.

For another example, the first condition may include: The terminal device is configured as the uplink intra-band contiguous CA in the CA scenario, only one of the plurality of component carriers in the CA is used by the terminal device to perform uplink data transmission, the RBs for data transmission in the component carrier used by the terminal device to perform uplink data transmission are contiguous, and the uplink channel bandwidth is less than or equal to 400 megahertz.

For example, the first indication information indicates to use a DFT-S-OFDM waveform and a first modulation scheme to perform uplink transmission.

For example, the first modulation scheme may include 16 QAM, 64 QAM, or higher-order QAM.

For example, the first indication information indicates the terminal device to use the DFT-S-OFDM waveform and the 16 QAM to perform uplink transmission, or the first indication information indicates the terminal device to use the DFT-S-OFDM waveform and the 64 QAM to perform uplink transmission. Details are not described one by one.

In this way, in this application, a modulation scheme that can be used when a single uplink CC is used in the CA scenario is extended to the 16 QAM, the 64 QAM, or the higher-order QAM that may be used when the single uplink CC is used in the CA scenario. The 16 QAM, the 64 QAM, and the higher-order QAM are high-order modulation schemes. In comparison with the use of a Pi/2 BPSK or QPSK modulation scheme, the use of the 16-QAM, 64-QAM, or higher-order-QAM modulation scheme has a larger quantity of bits of modulated information, so that a data transmission rate can be increased.

Optionally, the first indication information may be carried in RRC signaling.

For example, the first indication information includes information about the DFT-S-OFDM waveform, and the information about the DFT-S-OFDM waveform is carried in the RRC signaling, to indicate to use the DFT-S-OFDM waveform.

For example, the first indication information may be carried in an RRC configuration (RRC configuration) message. For example, the first indication information may be carried in a transform precoder (transform precoder) information element of an RC configuration message.

In some embodiments, a first correspondence exists among the DFT-S-OFDM waveform, the first modulation scheme, and a first power reduction range.

Optionally, the first power reduction range may include a maximum power reduction value.

In other words, the first correspondence includes correspondences between the DFT-S-OFDM waveform, the first modulation scheme, and the first power reduction range.

In this way, after receiving the first indication information, the terminal device may select the first power reduction range (corresponding to the used waveform and the modulation scheme) from the first correspondence to perform power reduction, to ensure that transmit power is in a linear region of a power amplifier, thereby ensuring system performance.

For example, the first correspondence includes: 16 QAM of the DFT-S-OFDM waveform corresponds to a first power reduction range 1, and/or 64 QAM of the DFT-S-OFDM waveform corresponds to a first power reduction range 2.

For example, the first correspondence may include: When the uplink channel bandwidth is less than or equal to 200 megahertz and a waveform for data transmission is the DFT-S-OFDM waveform, a maximum power reduction value corresponding to the 16 QAM is 3 dB or 3.5 dB, and a maximum power reduction value corresponding to the 64 QAM is 5 dB or 5.5 dB; and/or when the uplink channel bandwidth is equal to 400 megahertz and a waveform for data transmission is the DFT-S-OFDM waveform, a maximum power reduction value corresponding to the 16 QAM is 4.5 dB, and a maximum power reduction value corresponding to the 64 QAM is 6.5 dB.

For example, the first correspondence may include a correspondence related to DFT-S-OFDM shown in Table 7 and/or Table 8. After receiving the first indication information, the terminal device may determine, from Table 7 or Table 8, a maximum power reduction value corresponding to a waveform and a modulation scheme that are indicated by the first indication information, and perform power reduction, to ensure that the transmit power is in the linear region of the power amplifier, thereby ensuring the system performance.

**Table 7**

| Modulation waveform | Modulation scheme | Maximum power reduction value MPR_{WT} (unit: dB) (Uplink or downlink channel bandwidth BW_{channel} ≤ 200 MHz) | |
|---|---|---|---|
| | | Inner RB allocations (inner RB allocations) | Edge RB allocations (edge RB allocations) |
| DFT-S-OFDM | 16 QAM | ≤ 3.0 | ≤ 3.5 |
| | 64 QAM | ≤ 5.0 | ≤ 5.5 |

**Table 8**

| Modulation waveform | Modulation scheme | Maximum power reduction value MPR_{WT} (unit: dB) (Uplink or downlink channel bandwidth BW_{channel} = 400 MHz) | |
|---|---|---|---|
| | | Inner RB allocations (inner RB allocations) | Edge RB allocations (edge RB allocations) |
| DFT-S-OFDM | 16 QAM | ≤ 4.5 | ≤ 4.5 |
| | 64 QAM | ≤ 6.5 | ≤ 6.5 |

Optionally, the first correspondence may be preconfigured in the network device or the terminal device. Alternatively, the first correspondence may be sent by the network device to the terminal device.

With reference to the foregoing Table 7, Table 8, and Table 6, in comparison with the use of the CP-OFDM waveform, the use of the DFT-S-OFDM waveform has a less transmit power reduction value. For example, the transmit power reduction value is 2 dB to 2.5 dB less than that with the use of the CP-OFDM waveform (where the values of 2 dB to 2.5 dB are obtained by comparing the maximum power reduction value corresponding to the DFT-S-OFDM waveform in Table 8 with the maximum power reduction value corresponding to the CP-OFDM waveform in Table 6, for the 16 QAM, 6.5 - 4.5 = 2; and for 64 QAM, 9 - 6.5 = 2.5). Reduced transmit power is larger, a larger coverage gain can be obtained, a transmission rate is higher, and user experience is better.

S302: The terminal device sends data to the network device by using the DFT-S-OFDM waveform and the first modulation scheme. Correspondingly, the network device receives the data from the terminal device by using the DFT-S-OFDM waveform and the first modulation scheme.

If the first indication information indicates to use the DFT-S-OFDM waveform and the first modulation scheme to perform uplink transmission, the terminal device sends the data to the network device by using the DFT-S-OFDM waveform and the first modulation scheme based on the indication of the first indication information. The first modulation scheme includes the 16 QAM, the 64 QAM, or the higher-order QAM. In comparison with the use of Pi/2 BPSK or QPSK, the first modulation scheme can obtain a higher data transmission rate. Therefore, this can increase a data transmission rate of the terminal device when the terminal device uses the single uplink CC to perform data transmission in the CA scenario.

In a possible design manner, S302 may include: The terminal device sends the data to the network device by using the DFT-S-OFDM waveform and the first modulation scheme based on first transmit power.

Optionally, the first transmit power is obtained by performing transmit power reduction by the terminal device based on the first correspondence.

For example, the first transmit power = a maximum transmit power before reduction - the maximum power reduction value, where the maximum transmit power is determined by the terminal device from the first correspondence based on the DFT-S-OFDM waveform and the first modulation scheme.

For example, with reference to Table 7 and Table 8, it is assumed that the first indication information indicates the terminal device to use the DFT-S-OFDM waveform and the 16 QAM to perform uplink transmission. After receiving the first indication information, the terminal device determines uplink or downlink channel bandwidth. If the uplink or downlink channel bandwidth is less than or equal to 200 MHz, power reduction is performed according to a rule shown in Table 7. If the uplink or downlink channel bandwidth is equal to 400 MHz, power reduction is performed according to a rule shown in Table 8. Assuming that the uplink or downlink channel bandwidth is less than or equal to 200 MHz, and an allocated RB is an internal RB, the terminal device determines, according to the rule shown in Table 7, that the maximum power reduction value is 3.0 dB. Therefore, the first transmit power = the maximum transmit power before reduction - 3.0 dB.

Optionally, the terminal device may alternatively send the data to the network device through multi-stream transmission.

For example, the terminal device sends the data to the network device by using the DFT-S-OFDM waveform and the first modulation scheme through multi-stream transmission, so that the data transmission rate can be further increased.

For example, when the terminal device is located at a mid-near point of a coverage area of the network device, and the single uplink CC is used in the CA scenario, the terminal device uses a dual-stream, the DFT-S-OFDM waveform, and the 16 QAM, the 64 QAM, or the higher-order QAM to perform data transmission. Because the maximum power reduction value of the DFT-S-OFDM waveform is less than the maximum power reduction value of the CP-OFDM waveform, a corresponding data transmission rate of the terminal device using the dual stream, the DFT-S-OFDM waveform, and the 16 QAM, the 64 QAM, or the higher-order QAM is higher than a data transmission rate of the terminal device using the CP-OFDM waveform and corresponding 16 QAM, 64 QAM, or higher-order QAM to perform data transmission. In this way, in this application, a modulation scheme that can be used and that corresponds to the DFT-S-OFDM waveform when the single uplink CC is used in the CA scenario is extended, so that the data transmission rate of the terminal device when the terminal device is at the mid-near point and the single uplink CC is used in the CA scenario can be increased.

According to the communication method shown in FIG. 3, when there is one component carrier used by the terminal device to perform uplink data transmission in the CA scenario, the network device sends the first indication information to the terminal device, to indicate the terminal device to use the DFT-S-OFDM waveform and the first modulation scheme to perform uplink transmission. The first modulation scheme includes the 16 QAM or the 64 QAM. The 16 QAM and the 64 QAM are compared with the Pi/2 BPSK and the QPSK, and the 16 QAM and the 64 QAM have higher modulation orders, so that a higher data transmission rate can be obtained. In this way, a data transmission rate of the terminal device using the DFT-S-OFDM waveform can be increased when a single uplink CC is used in the CA scenario.

In addition, in comparison with the use of the CP-OFDM waveform, the use of the DFT-S-OFDM waveform makes transmit power reduction less, and obtains larger transmit power after the reduction. Therefore, a larger coverage gain can be obtained, and user experience is better. Therefore, when the terminal device is located at the mid-near point of the coverage area of the network device, and the single uplink CC is used in the CA scenario, the terminal device uses the DFT-S-OFDM waveform and the first modulation scheme to perform uplink transmission, so that an advantage of low MPR of the DFT-S-OFDM waveform can be fully taken, and the data transmission rate can be increased.

In this application, unless otherwise specified, for same or similar parts in embodiments, refer to each other. In various embodiments of this application and the implementations/methods/implementation methods in various embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

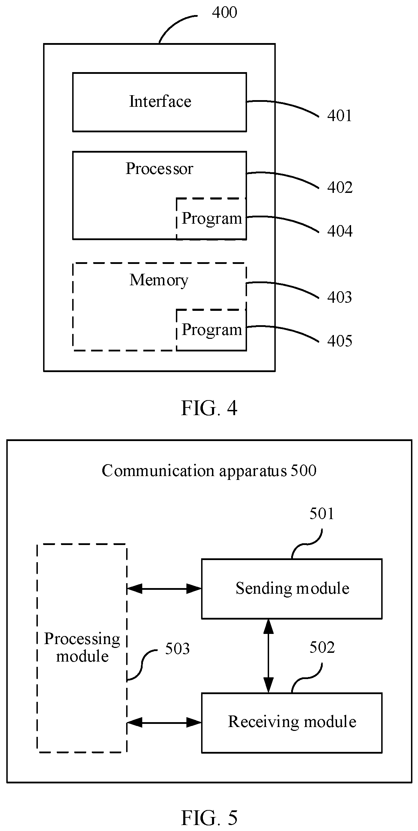

With reference to FIG. 1 to FIG. 3, the foregoing describes in detail the communication methods provided in embodiments of this application. With reference to FIG. 4 and FIG. 5, the following describes in detail the communication apparatus provided in embodiments of this application.

FIG. 4 is a diagram of a structure of a communication apparatus that may be configured to perform an embodiment of this application.

The communication apparatus 400 is configured to implement a function of a network element in this application. For example, the network element may be a base station (a network device), a terminal, a DU, a CU, a CU-CP, a CU-UP, or an RU. The communication apparatus 400 may be the network element, an apparatus that can be installed in the network element, or an apparatus that can be matched and used with the network element. This is not limited. For example, the apparatus may be a chip or a chip system. The communication apparatus 400 includes an interface 401 and a processor 402. Optionally, the processor 402 is configured to execute a program 404. The processor 402 may store a program 405, or obtain the program 405 from another component or another device (for example, from a memory 403 or downloaded from a third-party website). Optionally, the communication apparatus 400 includes a memory 403. The memory 403 is configured to store the program 405. The program 405 may be pre-stored, or may be subsequently loaded. Optionally, the memory 403 may be further configured to store necessary data. These components work together to provide various functions described in this application. For details, refer to the foregoing method embodiments. Details are not described herein again.

The processor 402 may include one or more processors to serve as a combination of computing devices. The processor 402 may separately include one or more of the following: a microprocessor, a microcontroller, a digital signal processor (DSP), a digital signal processing device (DSPD), an application-specific integrated circuit (ASIC), a field programmable gate array (FPGA), a programmable logic device (PLD), gating logic, transistor logic, a discrete hardware circuit, a processing circuit or another appropriate hardware or firmware, and/or a combination of hardware and software configured to perform the various functions described in this application. The processor 402 may be a general-purpose processor or a dedicated processor. For example, the processor 402 may be a baseband processor or a central processing unit. The baseband processor may be configured to process a communication protocol and communication data. The central processing unit may be configured to execute a software program and process data in the software program.

The interface 401 may include any appropriate hardware or software configured to enable communication with one or more computer devices (for example, network elements in this application). For example, in some embodiments, the interface 401 may include terminals and/or pins for coupling a wire for a wired connection or for coupling a wireless transceiver for a wireless connection. In some embodiments, the interface 401 may include a transmitter, a receiver, a transceiver, and/or an antenna. The interface may be configured to enable communication between computer devices (for example, the network elements in this application) by using any available protocol (for example, a 3GPP standard protocol).

The program in this application is software in a broad sense. The software may be program code, a program, a subprogram, an instruction set, code, a code segment, a software module, an application program, a software application program, or the like. The program may run in a processor and/or a computer, to perform the various functions and/or processes described in this application.

The memory 403 may store necessary data required when the processor 402 executes software. The memory 403 may be implemented by using any appropriate storage technology. For example, the memory 403 may be any available storage medium that may be accessed by a processor and/or a computer. A non-limiting example of a storage medium is: a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a removable medium, an optical disk memory, a magnetic storage medium, a magnetic storage device, a flash memory, a register, a state memory, a remote installation memory, a local or remote storage component, or any other medium that may carry or store software, data, or information and may be accessed by a processor/computer.

The memory 403 and the processor 402 may be disposed separately, or may be integrated together. The processor 402 may read information from the memory 403, and store and/or write information in the memory. The memory 403 may be integrated into the processor 402. The processor 402 and the memory 403 may be disposed in an integrated circuit (for example, an application-specific integrated circuit (application-specific integrated circuit, ASIC)). The integrated circuit may be disposed in the network element in this application or another network node.

It should be noted that the structure of the communication apparatus 400 shown in FIG. 4 does not constitute a limitation on the communication apparatus. An actual communication apparatus may include more or fewer parts than those shown in the figure, or some parts may be combined, or different part deployment may be used.

When the communication apparatus is a network device or a terminal device, the communication apparatus 400 may separately perform any one or more possible designs related to the network device or the terminal device in the foregoing method embodiments.

FIG. 5 is a diagram of a structure of another communication apparatus according to an embodiment of this application. As shown in FIG. 5, a communication apparatus 500 includes a receiving module 502 and a sending module 501, and may further include a processing module 503. For ease of description, FIG. 5 merely shows main parts of the communication apparatus 500.

In this embodiment, the communication apparatus 500 is presented in the form of dividing various functional modules in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the communication apparatus 500 may be in the form of the communication apparatus 400 shown in FIG. 4.

For example, the processor 402 in the communication apparatus 400 shown in FIG. 4 may invoke the program 404 stored in the processor 402 or the program 405 stored in the memory 403, so that the communication method in the foregoing method embodiments is performed.

Specifically, functions/implementation processes of the receiving module 502 and the sending module 501 in FIG. 5 may be implemented through the interface 401 in the communication apparatus 400 shown in FIG. 4. A function/implementation process of the processing module 503 in FIG. 5 may be implemented by the processor 402 in the communication apparatus 400 shown in FIG. 4 invoking the program 404 stored in the processor 402 or invoking the program 405 stored in the memory 403.

The communication apparatus 500 provided in this embodiment may perform the foregoing communication method. Therefore, for technical effects that can be obtained by the communication apparatus 500, refer to the foregoing method embodiments. Details are not described herein again.

In a possible design solution, the communication apparatus 500 shown in FIG. 5 is applicable to the system shown in FIG. 1, and performs a function of the network device in the communication method shown in FIG. 3.

The sending module 501 is configured to send first indication information to a terminal device when a first condition is satisfied. The receiving module 502 is configured to receive data from the terminal device by using a DFT-S-OFDM waveform and a first modulation scheme. The first condition includes: There is one component carrier used by the terminal device to perform uplink data transmission in a carrier aggregation CA scenario. The CA scenario includes that CA is configured for uplink and/or CA is configured for downlink. The first indication information indicates to use the discrete Fourier transform-spread-orthogonal frequency division multiplexing DFT-S-OFDM waveform and the first modulation scheme to perform uplink transmission. The first modulation scheme includes 16 quadrature amplitude modulation QAM or 64 QAM.

In a possible design manner, that there is one component carrier used by the terminal device to perform uplink data transmission may include: The terminal device is configured as a single uplink component carrier, and RBs for data transmission in the component carrier used by the terminal device to perform uplink data transmission are contiguous. Alternatively, the terminal device is configured as uplink intra-band contiguous CA, only one of a plurality of component carriers in the CA is used by the terminal device to perform uplink data transmission, and RBs for data transmission in the component carrier used by the terminal device to perform uplink data transmission are contiguous.

In a possible design manner, the first condition further includes: An uplink channel bandwidth is less than or equal to 400 megahertz.

In a possible design manner, a first correspondence exists among the DFT-S-OFDM waveform, the first modulation scheme, and a first power reduction range, and the first power reduction range includes a maximum power reduction value.

In a possible design manner, the first correspondence includes: When the uplink channel bandwidth is less than or equal to 200 megahertz and a waveform for data transmission is the DFT-S-OFDM waveform, a maximum power reduction value corresponding to the 16 QAM is 3 dB or 3.5 dB, and a maximum power reduction value corresponding to the 64 QAM is 5 dB or 5.5 dB.

In a possible design manner, the first correspondence includes: When the uplink channel bandwidth is equal to 400 megahertz and the waveform for data transmission is the DFT-S-OFDM waveform, the maximum power reduction value corresponding to the 16 QAM is 4.5 dB, and the maximum power reduction value corresponding to the 64 QAM is 6.5 dB.

In a possible design manner, the first indication information is carried in radio resource control RRC signaling.

In a possible design manner, the terminal device is a terminal that supports operating at a power class 3 of a frequency range 2 FR2.

It should be noted that all related content of the steps in the foregoing method embodiments may be cited in function description of corresponding functional modules. Details are not described herein again.

It should be noted that the sending module 501 and the receiving module 502 may be separately disposed, or may be integrated into one module, namely, a transceiver module. Specific implementations of the sending module 501 and the receiving module 502 are not specifically limited in this application. The transceiver module may include a transceiver circuit, a transceiver machine, a transceiver, or a communication interface.

The sending module 501 may also be referred to as a sending unit, and is configured to implement any one or more sending functions performed by a first communication device in any one of the foregoing method embodiments. The receiving module 502 may also be referred to as a receiving unit, and is configured to implement any one or more receiving functions performed by the network device in any one of the foregoing method embodiments.

Optionally, the communication apparatus 500 may further include a storage module (not shown in FIG. 5). The storage module stores a program or instructions. When the processing module 503 executes the program or the instructions, the communication apparatus 500 may perform the method according to any one of the foregoing method embodiments.

It should be noted that the communication apparatus 500 may be the network device, or may be a chip (a system) or another part or component that may be disposed in the network device. This is not limited in this application.

In addition, for technical effects of the communication apparatus 500, refer to the technical effects of the communication method shown in FIG. 3. Details are not described herein again.

In another possible design solution, the communication apparatus 500 shown in FIG. 5 is applicable to the system shown in FIG. 1, and performs a function of the terminal device in the communication method shown in FIG. 3. The communication apparatus 500 is applied to a scenario in which there is one component carrier used by the communication apparatus to perform uplink data transmission in a carrier aggregation CA. The CA scenario includes that CA is configured for uplink and/or CA is configured for downlink.

The receiving module 502 is configured to receive the first indication information from the network device. The sending module 501 is configured to send data to the network device by using the DFT-S-OFDM waveform and the first modulation scheme. The first indication information indicates to use the discrete Fourier transform-spread-orthogonal frequency division multiplexing DFT-S-OFDM waveform and the first modulation scheme to perform uplink transmission, and the first modulation scheme includes 16 quadrature amplitude modulation QAM or 64 QAM.

In a possible design manner, that there is one component carrier used by the communication apparatus 500 to perform uplink data transmission may include: The communication apparatus 500 is configured as a single uplink component carrier, or the communication apparatus 500 is configured as uplink intra-band contiguous CA, and only one of a plurality of component carriers in the CA is used by the communication apparatus 500 to perform uplink data transmission.

In a possible design manner, the first condition may further include: An uplink channel bandwidth is less than or equal to 400 megahertz.

In a possible design manner, a first correspondence exists among the DFT-S-OFDM waveform, the first modulation scheme, and a first power reduction range, and the first power reduction range includes a maximum power reduction value.

In a possible design manner, the sending module 501 is further configured to send, based on first transmit power, the data to the network device by using the DFT-S-OFDM waveform and the first modulation scheme. The first transmit power is obtained by performing transmit power reduction based on the first correspondence.

In a possible design manner, the first correspondence may include: When the uplink channel bandwidth is less than or equal to 200 megahertz and a waveform for data transmission is the DFT-S-OFDM waveform, a maximum power reduction value corresponding to the 16 QAM is 3 dB or 3.5 dB, and a maximum power reduction value corresponding to the 64 QAM is 5 dB or 5.5 dB.

In a possible design manner, the first correspondence may include: When the uplink channel bandwidth is equal to 400 megahertz and the waveform for data transmission is the DFT-S-OFDM waveform, the maximum power reduction value corresponding to the 16 QAM is 4.5 dB, and the maximum power reduction value corresponding to the 64 QAM is 6.5 dB.

In a possible design manner, the first indication information is carried in radio resource control RRC signaling.

In a possible design manner, the communication apparatus 500 is a terminal that supports operating at a power class 3 of a frequency range 2 FR2.

It should be noted that all related content of the steps in the foregoing method embodiments may be cited in function description of corresponding functional modules. Details are not described herein again.

It should be noted that the sending module 501 and the receiving module 502 may be separately disposed, or may be integrated into one module, namely, a transceiver module. Specific implementations of the sending module 501 and the receiving module 502 are not specifically limited in this application. The transceiver module may include a transceiver circuit, a transceiver machine, a transceiver, or a communication interface.

The sending module 501 may also be referred to as a sending unit, and is configured to implement any one or more sending functions performed by the terminal device in any one of the foregoing method embodiments. The receiving module 502 may also be referred to as a receiving unit, and is configured to implement any one or more receiving functions performed by the terminal device in any one of the foregoing method embodiments.

Optionally, the communication apparatus 500 may further include a storage module (not shown in FIG. 5). The storage module stores a program or instructions. When the processing module 503 executes the program or the instructions, the communication apparatus 500 may perform the method according to any one of the foregoing method embodiments.

It should be noted that the communication apparatus 500 may be the terminal device, or may be a chip (a system) or another part or component that may be disposed in the terminal device. This is not limited in this application.

In addition, for technical effects of the communication apparatus 500, refer to the technical effects of the communication method shown in FIG. 5. Details are not described herein again.

An embodiment of this application provides a communication system. The communication system includes a network device and a terminal device.

The network device is configured to perform an action of the network device in the foregoing method embodiments, and the terminal device is configured to perform an action of the terminal device in the foregoing method embodiments. For a specific execution method and process, refer to the foregoing method embodiments. Details are not described herein again.

An embodiment of this application provides a chip system. The chip system includes a logic circuit and an input/output port. The logic circuit may be configured to implement a processing function related to the communication method provided in embodiments of this application, and the input/output port may be configured to implement a transceiver function related to the communication method provided in embodiments of this application.

For example, the input port may be configured to implement a receiving function related to the communication method provided in embodiments of this application, and the output port may be configured to implement a sending function related to the communication method provided in embodiments of this application.

For example, the processor in the communication apparatus 400 may be configured to perform, for example, but not limited to, baseband-related processing, and the transceiver in the communication apparatus 400 may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more components may be integrated on a same chip. For example, the digital baseband processor may be integrated on a same chip with a plurality of application processors (for example, but not limited to a geometric processor and a multimedia processor). The chip may be referred to as a system on chip (system on chip). Whether components are independently disposed on different chips or are integrated and disposed on one or more chips usually depends on a specific requirement of a product design. Embodiments of this application impose no limitation on specific implementations of the foregoing components.

In a possible design, the chip system further includes a memory, and the memory is configured to store program instructions and data for implementing a function related to the communication method provided in embodiments of this application.

The chip system may include a chip, or may include a chip and another discrete component.

An embodiment of this application provides a computer-readable storage medium. The computer-readable storage medium stores a computer program or instructions. When the computer program or the instructions are run on a computer, the communication method provided in embodiments of this application is performed.

An embodiment of this application provides a computer program product. The computer program product includes a computer program or instructions. When the computer program or the instructions are run on a computer, the communication method provided in embodiments of this application is performed.

It should be understood that, in embodiments of this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should also be understood that a memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement embodiments, the foregoing embodiments may be implemented completely or partially in the form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored in a storage medium, and includes a plurality of instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending first indication information to a terminal device when a first condition is satisfied, wherein the first condition comprises: there is one component carrier used by the terminal device to perform uplink data transmission in a carrier aggregation CA scenario; and the CA scenario comprises that CA is configured for uplink and/or CA is configured for downlink, the first indication information indicates to use a discrete Fourier transform-spread-orthogonal frequency division multiplexing DFT-S-OFDM waveform and a first modulation scheme to perform uplink transmission, and the first modulation scheme comprises 16 quadrature amplitude modulation QAM or 64 QAM; and
receiving data from the terminal device by using the DFT-S-OFDM waveform and the first modulation scheme.

2. The communication method according to claim 1, wherein that there is one component carrier used by the terminal device to perform uplink data transmission comprises: the terminal device is configured as a single uplink component carrier, and resource blocks RBs for data transmission in the component carrier used by the terminal device to perform uplink data transmission are contiguous; or the terminal device is configured as uplink intra-band contiguous CA, only one of a plurality of component carriers in the CA is used by the terminal device to perform uplink data transmission, and RBs for data transmission in the component carrier used by the terminal device to perform uplink data transmission are contiguous.

3. The communication method according to claim 1 or 2, wherein the first condition further comprises: an uplink channel bandwidth is less than or equal to 400 megahertz.

4. The communication method according to any one of claims 1 to 3, wherein a first correspondence exists among the DFT-S-OFDM waveform, the first modulation scheme, and a first power reduction range, and the first power reduction range comprises a maximum power reduction value.

5. The communication method according to claim 4, wherein the first correspondence comprises: when the uplink channel bandwidth is less than or equal to 200 megahertz and a waveform for data transmission is the DFT-S-OFDM waveform, a maximum power reduction value corresponding to the 16 QAM is 3 dB or 3.5 dB, and a maximum power reduction value corresponding to the 64 QAM is 5 dB or 5.5 dB.

6. The communication method according to claim 4 or 5, wherein the first correspondence comprises: when the uplink channel bandwidth is equal to 400 megahertz and the waveform for data transmission is the DFT-S-OFDM waveform, the maximum power reduction value corresponding to the 16 QAM is 4.5 dB, and the maximum power reduction value corresponding to the 64 QAM is 6.5 dB.

7. The communication method according to any one of claims 1 to 6, wherein the first indication information is carried in radio resource control RRC signaling.

8. The communication method according to any one of claims 1 to 7, wherein the terminal device is a terminal that supports operating at a power class 3 of a frequency range 2 FR2.

9. A communication method, applied to a scenario in which there is one component carrier used by a terminal device to perform uplink data transmission in a carrier aggregation CA scenario, wherein the CA scenario comprises that CA is configured for uplink and/or CA is configured for downlink, and the method comprises:
receiving first indication information from a network device, wherein the first indication information indicates to use a discrete Fourier transform-spread-orthogonal frequency division multiplexing DFT-S-OFDM waveform and a first modulation scheme to perform uplink transmission, and the first modulation scheme comprises 16 quadrature amplitude modulation QAM or 64 QAM; and
sending data to the network device by using the DFT-S-OFDM waveform and the first modulation scheme.

10. The communication method according to claim 9, wherein that there is one component carrier used by the terminal device to perform uplink data transmission comprises: the terminal device is configured as a single uplink component carrier, and resource blocks RBs for data transmission in the component carrier used by the terminal device to perform uplink data transmission are contiguous; or the terminal device is configured as uplink intra-band contiguous CA, only one of a plurality of component carriers in the CA is used by the terminal device to perform uplink data transmission, and RBs for data transmission in the component carrier used by the terminal device to perform uplink data transmission are contiguous.

11. The communication method according to claim 9 or 10, wherein the first condition further comprises: an uplink channel bandwidth is less than or equal to 400 megahertz.

12. The communication method according to any one of claims 9 to 11, wherein a first correspondence exists among the DFT-S-OFDM waveform, the first modulation scheme, and a first power reduction range, and the first power reduction range comprises a maximum power reduction value.

13. The communication method according to claim 12, wherein the sending data to the network device by using the DFT-S-OFDM waveform and the first modulation scheme comprises:
sending the data to the network device by using the DFT-S-OFDM waveform and the first modulation scheme based on first transmit power, wherein the first transmit power is obtained by performing transmit power reduction based on the first correspondence.

14. The communication method according to claim 12 or 13, wherein the first correspondence comprises: when the uplink channel bandwidth is less than or equal to 200 megahertz and a waveform for data transmission is the DFT-S-OFDM waveform, a maximum power reduction value corresponding to the 16 QAM is 3 dB or 3.5 dB, and a maximum power reduction value corresponding to the 64 QAM is 5 dB or 5.5 dB.

15. The communication method according to any one of claims 12 to 14, wherein the first correspondence comprises: when the uplink channel bandwidth is equal to 400 megahertz and the waveform for data transmission is the DFT-S-OFDM waveform, the maximum power reduction value corresponding to the 16 QAM is 4.5 dB, and the maximum power reduction value corresponding to the 64 QAM is 6.5 dB.

16. The communication method according to any one of claims 9 to 15, wherein the first indication information is carried in radio resource control RRC signaling.

17. The communication method according to any one of claims 9 to 16, wherein the terminal device is a terminal that supports operating at a power class 3 of a frequency range 2 FR2.

18. A communication apparatus, wherein the communication apparatus comprises a unit or a module configured to perform the method according to any one of claims 1 to 8.

19. A communication apparatus, wherein the communication apparatus comprises a unit or a module configured to perform the method according to any one of claims 9 to 17.

20. A communication apparatus, wherein the communication apparatus comprises a processor, and the processor is configured to perform the communication method according to any one of claims 1 to 17.

21. A communication system, wherein the communication system comprises the communication apparatus according to claim 18 and the communication apparatus according to claim 19.

22. A computer-readable storage medium, wherein the computer-readable storage medium stores a computer program or instructions, and when the computer program or the instructions are run on a computer, the communication method according to any one of claims 1 to 17 is performed.

23. A computer program product, wherein the computer program product comprises a computer program or instructions, and when the computer program or the instructions are run on a computer, the communication method according to any one of claims 1 to 17 is performed.
